# EUROPEAN PATENT APPLICATION

(11) **EP 4 700 870 A1**
(43) Date of publication of application: **25.02.2026**
(21) Application number: 24819058.9
(22) Date of filing: 25.04.2024
(51) Int. Cl.: H01M 4/66, H01G 11/12, H01G 11/68, H01G 11/70, H01M 4/02, H01M 4/13

(54) **POWER STORAGE DEVICE**

(30) Priority: 08.06.2023 JP 2023094625
(71) Applicant: KABUSHIKI KAISHA TOYOTA JIDOSHOKKI, Kariya-shi, Aichi 448-8671 (JP)
(72) Inventor: WATANABE, Yusuke, Kariya-shi, Aichi 448-8671 (JP); NAKAMURA,Tomohiro, Kariya-shi, Aichi 448-8671 (JP); HIROSE, Takayuki, Kariya-shi, Aichi 448-8671 (JP)
(74) Representative: TBK
(86) International application number: PCT/JP2024/016333
(87) International publication number: WO 2024/252821

(57) **Abstract**

A power storage device includes a plurality of bipolar electrodes, each of the plurality of bipolar electrodes including a first current collector foil and a second current collector foil overlapping each other, a conductive adhesive layer positioned between the first current collector foil and the second current collector foil and bonded to the first current collector foil and the second current collector foil, a first active material layer positioned on a surface of the first current collector foil, and a second active material layer positioned on a surface of the second current collector foil. The conductive adhesive layer includes an adhesive and a conductive auxiliary agent dispersed in the adhesive, the conductive auxiliary agent is a spherical particle having a spherical core and a conductive film covering the core, an addition ratio of the conductive auxiliary agent in the conductive adhesive layer is 0.1% by volume or more and 1.0% by volume or less, and a first value obtained by adding twice a standard deviation of a particle size of the conductive auxiliary agent to an average particle size of the conductive auxiliary agent is greater than or equal to a thickness of the conductive adhesive layer.

## Description

### Technical Field

The present disclosure relates to a power storage device.

### Background Art

As a conventional power storage device, for example, there is a bipolar battery described in Patent Literature 1. This conventional bipolar battery includes a plurality of bipolar electrodes, each having a positive electrode active material layer formed on one surface of a current collector and a negative electrode active material layer formed on the other surface. These bipolar electrodes are laminated with a gel electrolyte layer interposed therebetween to constitute the bipolar battery.

### Citation List

### Patent Literature

[Patent Literature 1] Japanese Unexamined Patent Publication No. 2004-319210

### Summary of Invention

### Technical Problem

As a current collector for bipolar electrodes used in the above-described bipolar battery, a structure in which metal foils of different materials are bonded together via a conductive adhesive (bonded foil) may be used. The conductive adhesive is, for example, a thermosetting resin as a main component of the adhesive in which particulate conductive auxiliary agents (conductive particles) such as conductive fillers are dispersed. Carbon black is widely known as a conductive auxiliary agent, for example. Here, when a conductive adhesive using carbon black as the conductive auxiliary agent is used for bonding the bonded foil, in order to sufficiently reduce the resistance value of the bonded foil, it is necessary to include a large amount of carbon black in the conductive adhesive. In this case, there arises a problem that the bonding strength of the bonded foil decreases.

An object of the present disclosure is to provide a power storage device including a bipolar electrode having a bonded foil that exhibits both favorable bonding strength and favorable conductivity.

### Solution to Problem

A power storage device according to one aspect of the present disclosure is a power storage device including a plurality of bipolar electrodes overlapping each other in a lamination direction, wherein each of the plurality of bipolar electrodes includes a first current collector foil and a second current collector foil overlapping each other in the lamination direction, a conductive adhesive layer positioned between the first current collector foil and the second current collector foil and bonded to the first current collector foil and the second current collector foil, a first active material layer positioned on a surface of the first current collector foil, and a second active material layer positioned on a surface of the second current collector foil. The conductive adhesive layer includes an adhesive and a conductive auxiliary agent dispersed in the adhesive, the conductive auxiliary agent is a spherical particle having a spherical core and a conductive film covering the core, an addition ratio of the conductive auxiliary agent in the conductive adhesive layer is 0.1% by volume or more and 1.0% by volume or less, and a first value obtained by adding twice a standard deviation of a particle size of the conductive auxiliary agent to an average particle size of the conductive auxiliary agent is greater than or equal to a thickness of the conductive adhesive layer.

In this power storage device, each of the plurality of bipolar electrodes has a bonded foil in which the first current collector foil and the second current collector foil are bonded together via the conductive adhesive layer. Further, the conductive auxiliary agent dispersed in the adhesive in the conductive adhesive layer is a spherical particle having a spherical core and a conductive film covering the core, the addition ratio of the conductive auxiliary agent in the conductive adhesive layer is 0.1% by volume or more and 1.0% by volume or less, and a first value obtained by adding twice a standard deviation of the particle size of the conductive auxiliary agent to the average particle size of the conductive auxiliary agent is greater than or equal to the thickness of the conductive adhesive layer. Thus, it is possible to sufficiently lower the internal resistance of the conductive adhesive layer while ensuring the bonding strength between the first current collector foil and the second current collector foil by the conductive adhesive layer. Therefore, according to the power storage device, it is possible to provide a bipolar electrode exhibiting favorable bonding strength and conductivity.

The average particle size of the conductive auxiliary agent may be greater than the thickness of the conductive adhesive layer. In this case, conduction between the first current collector foil and the second current collector foil via the conductive auxiliary agent is further improved.

Each of the first current collector foil and the second current collector foil may have a rectangular shape, a length of one side of the first current collector foil and a length of one side of the second current collector foil may be each 500 mm or more, and a CV value of the particle size of the conductive auxiliary agent in the conductive adhesive layer may be 10% or less. In this case, a conductive auxiliary agent having a particle size significantly larger than the thickness of the conductive adhesive layer is less likely to be present in the conductive adhesive layer. Thus, even when the bipolar electrode is enlarged, air entrapment caused by the conductive auxiliary agent is less likely to occur between the first current collector foil and the second current collector foil. Therefore, an increase in resistance of the bipolar electrode due to deformation or the like of the first current collector foil and/or the second current collector foil caused by such air is less likely to occur. In addition, even when the bipolar electrode is enlarged, each of the first current collector foil and the second current collector foil can be favorably bonded to the conductive adhesive layer.

Each of the first current collector foil and the second current collector foil may have a rectangular shape, a length of one side of the first current collector foil and a length of one side of the second current collector foil may be each 500 mm or more, and a second value obtained by adding a value three times the standard deviation to the average particle size of the conductive auxiliary agent may be less than or equal to a value twice the thickness of the conductive adhesive layer. In this case, a conductive auxiliary agent having a particle size significantly larger than the thickness of the conductive adhesive layer is less likely to be present in the conductive adhesive layer. Thus, even when the bipolar electrode is enlarged, air entrapment caused by the conductive auxiliary agent is less likely to occur between the first current collector foil and the second current collector foil. Therefore, an increase in resistance of the bipolar electrode due to deformation or the like of the first current collector foil and/or the second current collector foil caused by such air is less likely to occur. In addition, even when the bipolar electrode is enlarged, each of the first current collector foil and the second current collector foil can be favorably bonded to the conductive adhesive layer.

A thickness of the first current collector foil may be twice or more a thickness of the second current collector foil, the thickness of the second current collector foil may be less than 10 µm, the thickness of the conductive adhesive layer may be smaller than the thickness of the second current collector foil, and a CV value of the particle size of the conductive auxiliary agent in the conductive adhesive layer may be 10% or less. In this case, a conductive auxiliary agent having a particle size significantly larger than the thickness of the conductive adhesive layer is less likely to be present in the conductive adhesive layer. Thus, air entrapment caused by the conductive auxiliary agent is less likely to occur between the first current collector foil and the second current collector foil. Therefore, an increase in resistance of the bipolar electrode due to deformation or the like of the current collector foil (especially the second current collector foil) caused by such air is less likely to occur.

The conductive adhesive layer may further include an epoxy-based curing agent as a curing agent together with an olefin-based adhesive as the adhesive. In this case, high electrolyte resistance can be exhibited as the adhesive, so favorable bonding strength can be exhibited over a long period. In addition, when an epoxy-based curing agent is used as the curing agent together with an olefin-based adhesive as the adhesive, gas generation in the curing reaction between the adhesive and the curing agent during manufacturing of the current collector can be favorably reduced.

### Advantageous Effects of Invention

According to the present disclosure, it is possible to provide a power storage device including a bipolar electrode current collector having a bonded foil in which a plurality of metal foils are bonded together via a conductive adhesive, and exhibiting both favorable bonding strength and favorable conductivity.

### Brief Description of Drawings

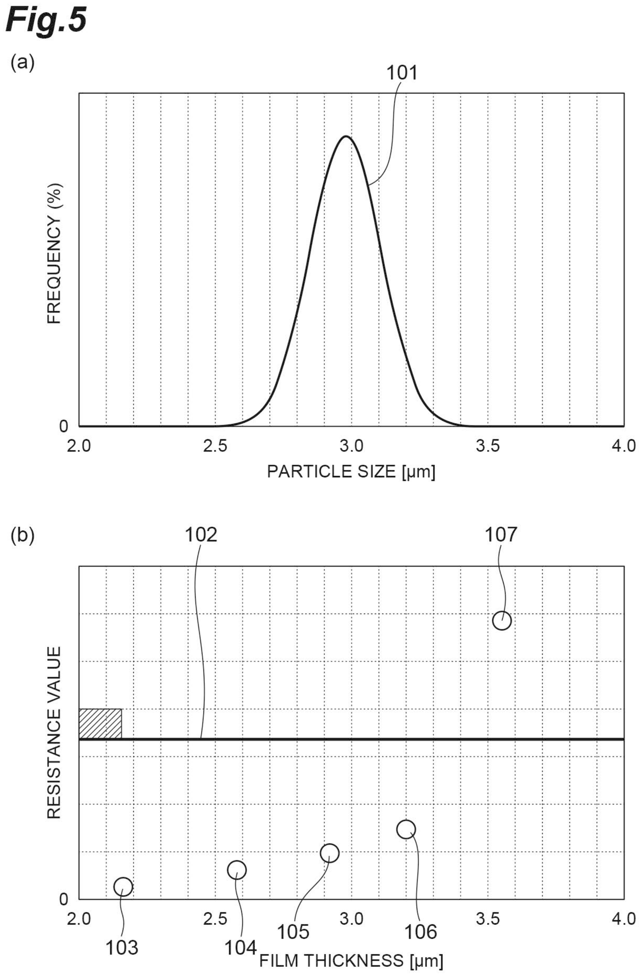

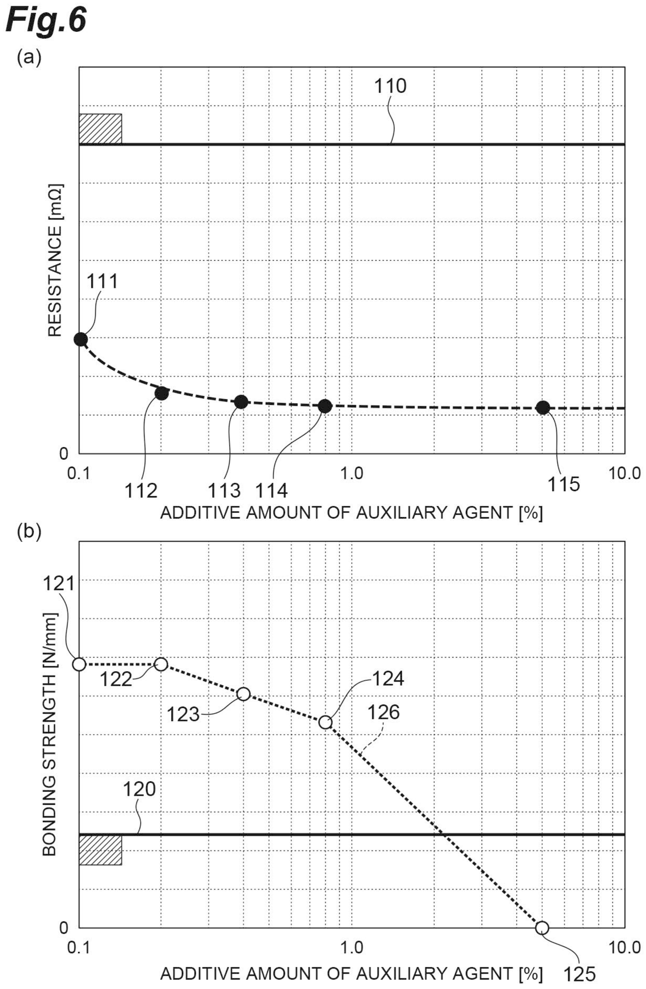

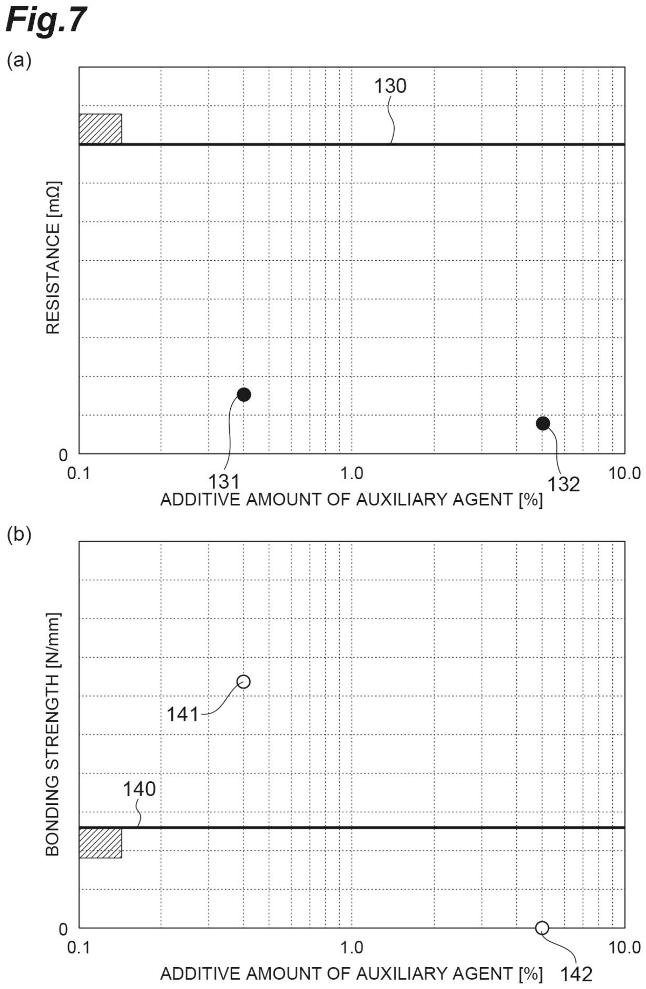

FIG. 1 is a schematic cross-sectional view illustrating a power storage device according to one embodiment.
FIG. 2 is an enlarged view of a main part of FIG. 1.
(a) of FIG. 3 is an enlarged cross-sectional view of a main part of a current collector, and (b) of FIG. 3 is an enlarged cross-sectional view of a conductive auxiliary agent.
FIG. 4 is a schematic diagram illustrating a coating apparatus used for manufacturing a current collector.
(a) of FIG. 5 is a diagram illustrating a particle size distribution of a first conductive auxiliary agent dispersed in a conductive adhesive layer, and (b) of FIG. 5 is a diagram illustrating a relationship between the thickness of the conductive adhesive layer and the resistance value of a sample.
(a) of FIG. 6 is a diagram illustrating a relationship between an additive amount of a first conductive auxiliary agent in a conductive adhesive layer and an internal resistance of the conductive adhesive layer, and (b) of FIG. 6 is a diagram illustrating a relationship between an additive amount of a first conductive auxiliary agent in a conductive adhesive layer and a bonding strength of the conductive adhesive layer.
(a) of FIG. 7 is a diagram illustrating a relationship between an additive amount of a second conductive auxiliary agent in a conductive adhesive layer and an internal resistance of the conductive adhesive layer, and (b) of FIG. 7 is a diagram illustrating a relationship between an additive amount of a second conductive auxiliary agent in a conductive adhesive layer and a bonding strength of the conductive adhesive layer.

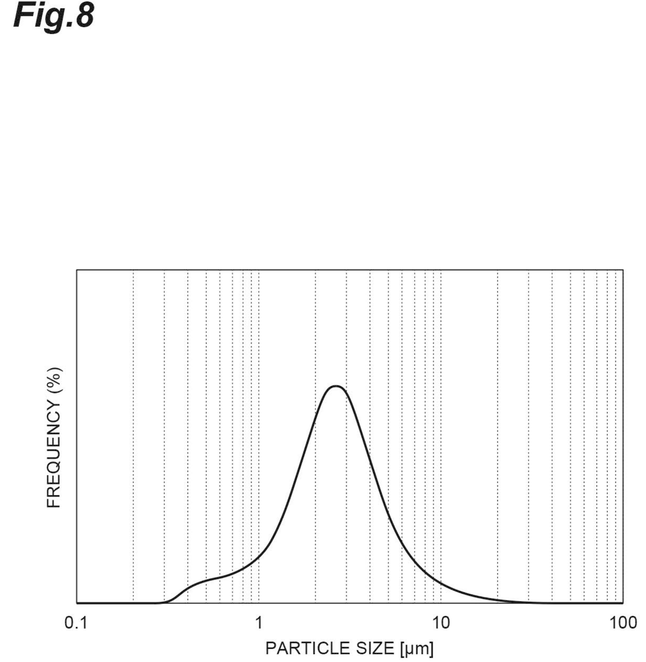

FIG. 8 illustrates a particle size distribution of a second conductive auxiliary agent included in the eleventh and twelfth samples.

### Description of Embodiments

Hereinafter, a preferred embodiment of a power storage device according to one aspect of the present disclosure will be described in detail with reference to the drawings.

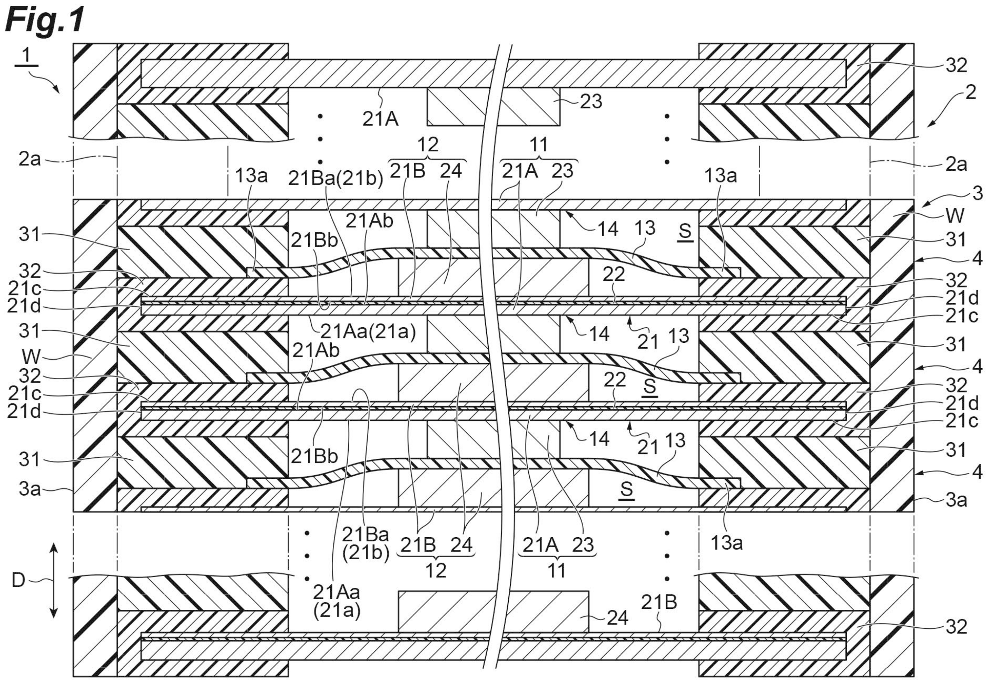

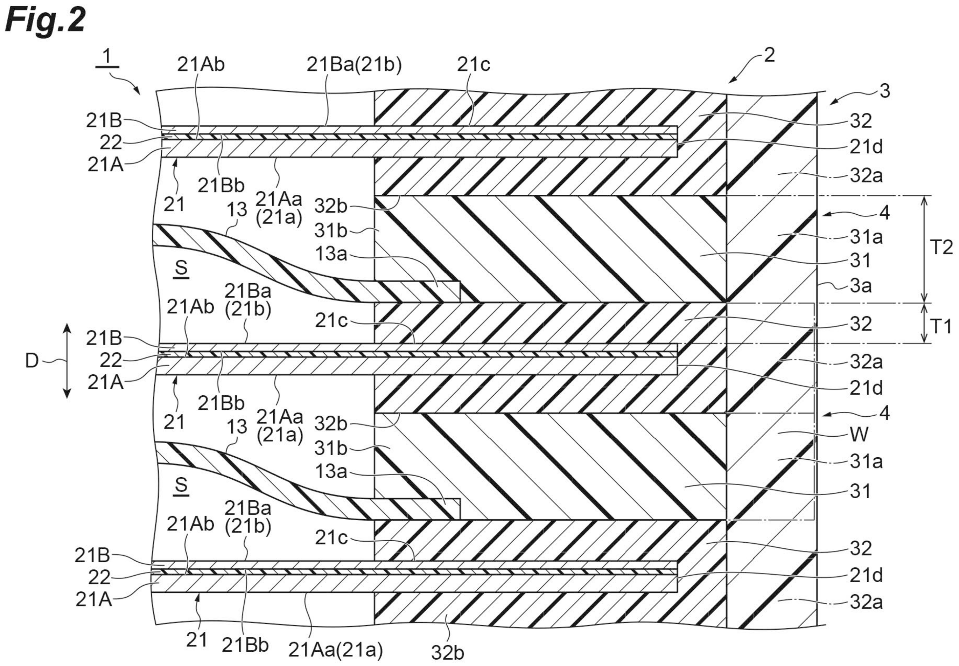

FIG. 1 is a schematic cross-sectional view illustrating a power storage device according to one embodiment. FIG. 2 is an enlarged view of a main part of FIG. 1. A power storage device 1 illustrated in FIG. 1 is a device (vehicle power storage battery) used for batteries of various vehicles such as forklifts, hybrid vehicles, and electric vehicles. The power storage device 1 is, for example, a secondary battery such as a nickel-metal hydride secondary battery or a lithium-ion secondary battery. The power storage device 1 may be an electric double-layer capacitor or an all-solid-state battery. Hereinafter, a case where the power storage device 1 is a lithium-ion secondary battery will be exemplified.

The power storage device 1 includes an electrode laminate 2, which is a laminate of a plurality of bipolar electrodes 14, and a sealing body 3 that seals a side surface 2a extending in a lamination direction D of the bipolar electrode 14 in the electrode laminate 2. Therefore, the power storage device 1 is also referred to as a vehicle bipolar battery. As illustrated in FIG. 1, the electrode laminate 2 includes a plurality of cells 4. Each cell 4 has a positive electrode 11, a negative electrode 12, and a separator 13.

The positive electrode 11 and the negative electrode 12 have, for example, a rectangular shape when viewed from the lamination direction D. The positive electrode 11 and the negative electrode 12 are disposed to face each other with the separator 13 interposed therebetween. The facing direction of the positive electrode 11 and the negative electrode 12 coincides with the lamination direction D of the bipolar electrode 14. The positive electrode 11 is constituted by a current collector 21 and a positive electrode active material layer 23 provided on a first surface 21a of the current collector 21. The negative electrode 12 includes a current collector 21 and a negative electrode active material layer 24 provided on a second surface 21b of the current collector 21.

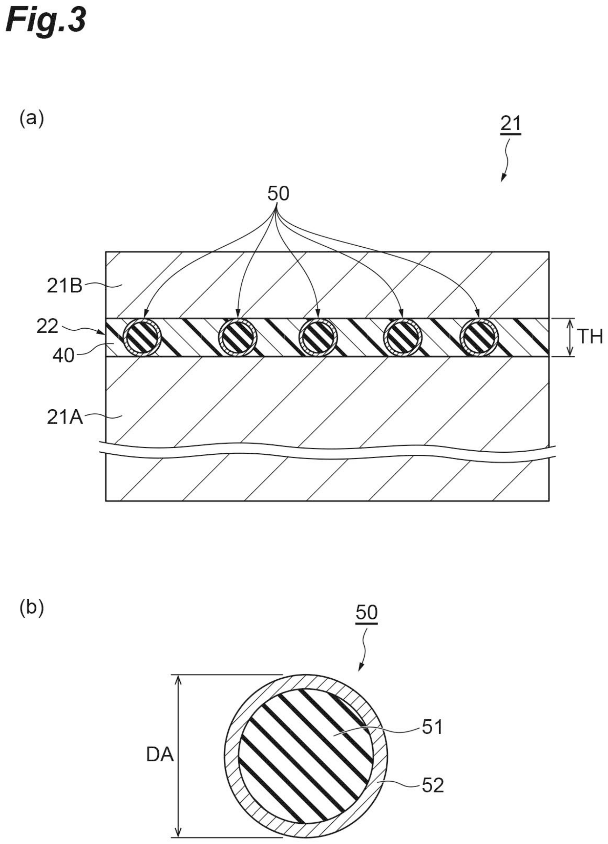

(a) of FIG. 3 is an enlarged cross-sectional view of a main part of a current collector. The current collector 21 is a chemically inactive electric conductor for continuously flowing a current through the positive electrode active material layer 23 and the negative electrode active material layer 24 during discharge or charge of the lithium-ion secondary battery, and is a member used for the bipolar electrode 14 (current collector for bipolar electrode). As illustrated in (a) of FIG. 3, the current collector 21 has a three-layer structure including a first current collector foil 21A, a second current collector foil 21B, and a conductive adhesive layer 22 positioned between the first current collector foil 21A and the second current collector foil 21B and bonding the first current collector foil 21A and the second current collector foil 21B.

Each of the first current collector foil 21A and the second current collector foil 21B is a conductive member having, for example, a rectangular shape when viewed from the lamination direction D. The first current collector foil 21A and the second current collector foil 21B are integrated with each other via the conductive adhesive layer 22. The first current collector foil 21A and the second current collector foil 21B overlapping each other in the lamination direction D are electrically connected to each other via the conductive adhesive layer 22. A first surface 21Aa of the first current collector foil 21A is an exposed surface (outer surface) located on the opposite side of the surface in contact with the conductive adhesive layer 22, and corresponds to the first surface 21a of the current collector 21. A second surface 21Ab of the first current collector foil 21A is a surface bonded to the conductive adhesive layer 22. A first surface 21Ba of the second current collector foil 21B is an exposed surface (outer surface) located on the opposite side of the surface in contact with the conductive adhesive layer 22, and corresponds to the second surface 21b of the current collector 21. A second surface 21Bb of the second current collector foil 21B is a surface bonded to the conductive adhesive layer 22. When viewed from the lamination direction D, a length of one side of the first current collector foil 21A and a length of one side of the second current collector foil 21B are each 500 mm or more. The length may be 750 mm or more, 1000 mm or more, or 1200 mm or more.

In a part of each cell 4 included in the electrode laminate 2, the positive electrode 11 is constituted by a part of a predetermined bipolar electrode 14, and the negative electrode 12 is constituted by a part of another bipolar electrode 14. In the electrode laminate 2, a plurality of cells 4 are formed by alternately laminating the bipolar electrode 14 and the separator 13. Thus, the plurality of cells 4 are electrically connected in series. In the cells 4 and 4 adjacent to each other in the lamination direction D, an identical bipolar electrode 14 may be shared. At one end of the electrode laminate 2 in the lamination direction D, a terminal electrode (positive electrode terminal electrode) including the first current collector foil 21A is disposed. At the other end of the electrode laminate 2 in the lamination direction D, a terminal electrode (negative electrode terminal electrode) including the second current collector foil 21B is disposed.

The first current collector foil 21A and the second current collector foil 21B may be formed in, for example, a plate shape, foil shape, sheet shape, film shape, or the like. When the first current collector foil 21A and the second current collector foil 21B are metal foils, for example, an aluminum foil, a copper foil, a nickel foil, a titanium foil, or a stainless steel foil is used. From the viewpoint of durability or the like against positive electrode potential, the first current collector foil 21A is, for example, an aluminum foil. From the viewpoint of durability or the like against negative electrode potential, the second current collector foil 21B is, for example, a copper foil. The first current collector foil 21A and the second current collector foil 21B may be an alloy foil or a clad foil of the above metal. When the first current collector foil 21A and the second current collector foil 21B are in a foil shape, the thickness of the first current collector foil 21A and the second current collector foil 21B along the lamination direction D may be in a range of 1 µm or more and 150 µm or less, respectively. From the viewpoint of durability of the current collector 21, at least one of the thickness of the first current collector foil 21A and the thickness of the second current collector foil 21B may be 50 µm or more, 40 µm or more, or 30 µm or more. One of the first current collector foil 21A and the second current collector foil 21B has a thickness of, for example, 1 µm or more and less than 10 µm, and the other has a thickness of, for example, 20 µm or more and 150 µm or less. That is, one of the first current collector foil 21A and the second current collector foil 21B is a thin current collector foil having a thickness less than 10 µm, and the other of the first current collector foil 21A and the second current collector foil 21B is a current collector foil having a thickness at least twice that of the thin current collector foil.

In the present embodiment, the first current collector foil 21A is an aluminum foil, and the second current collector foil 21B is a copper foil. The aluminum foil as the first current collector foil 21A and the copper foil as the second current collector foil 21B are integrated by bonding via the conductive adhesive layer 22. Therefore, the current collector 21 can be referred to as a bonded foil in which the first current collector foil 21A and the second current collector foil 21B are bonded together via the conductive adhesive layer 22. From the viewpoint of cost, weight and the like, the thickness of the first current collector foil 21A is greater than the thickness of the second current collector foil 21B in the current collector 21. The thickness of the first current collector foil 21A included in the bipolar electrode 14 is, for example, 40 µm or more and 100 µm or less. From the viewpoint of strength of the current collector 21, the thickness of the first current collector foil 21A may be five times or more the thickness of the second current collector foil 21B. In this case, for example, even if the thickness of the second current collector foil 21B is 9 µm or less, the thickness of the first current collector foil 21A can be 45 µm or more, so the strength of the current collector 21 can be sufficient as a bonded foil. The thickness of the second current collector foil 21B included in the bipolar electrode 14 is, for example, 5 µm or more and less than 10 µm. On the other hand, the thickness of the first current collector foil 21A included in the positive electrode terminal electrode constituting the outermost electrode of the electrode laminate 2 may be 100 µm or more and 150 µm or less. As the negative electrode terminal electrode constituting the outermost electrode of the electrode laminate 2, the same bonded foil as the current collector 21 is used. The thickness of the first current collector foil included in the negative electrode terminal electrode may be 100 µm or more and 150 µm or less. That is, by making the first current collector foil thick, the thin second current collector foil can be reinforced.

The conductive adhesive layer 22 is an anisotropic conductive member that bonds the first current collector foil 21A and the second current collector foil 21B to integrate them with each other, and is positioned between the first current collector foil 21A and the second current collector foil 21B in the lamination direction D. In addition, the conductive adhesive layer 22 is a member that electrically connects the first current collector foil 21A and the second current collector foil 21B to each other. From the viewpoint of ensuring bonding strength between the first current collector foil 21A and the second current collector foil 21B, reducing the internal resistance of the current collector 21, reducing the thickness of the current collector 21, and the like, the thickness TH of the conductive adhesive layer 22 is, for example, 2 µm or more and 5 µm or less. As illustrated in (a) of FIG. 3, the conductive adhesive layer 22 includes an adhesive 40 and a plurality of conductive auxiliary agents 50 dispersed in the adhesive 40.

The adhesive 40 contains a resin exhibiting adhesiveness to both the first current collector foil 21A and the second current collector foil 21B. Examples of the resin include olefin-based resins such as polyethylene, polypropylene, and polybutylene, ethylene-vinyl acetate copolymer (EVA), polyethylene terephthalate (PET), polyethylene naphthalate (PEN), polyethernitrile (PEN), polyimide (PI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVDF), silicone, epoxy resin, or mixtures thereof. Since the above resin has low ionic conductivity, transmission of lithium ions via the adhesive 40 can be suppressed. From the viewpoint of resistance or the like to electrolytes contained in the power storage device 1, the above resin may be an olefin-based adhesive (olefin-based adhesive such as polyethylene or polypropylene) or the like. The molecular weight of the olefin-based adhesive is, for example, several tens of thousands or less. In this case, the dispersibility of the above resin in the solvent in the adhesive 40 is improved. In one example, the olefin-based adhesive is low molecular weight polypropylene (polypropylene having a molecular weight of several tens of thousands or less). The thickness of the adhesive 40 corresponds to the thickness TH of the conductive adhesive layer 22.

The adhesive 40 may further contain various additives such as a curing agent, anti-blocking agent, antioxidant, and light stabilizer in addition to the above resin. When the above resin is an olefin-based resin adhesive, for example, isocyanate-based curing agents or epoxy-based curing agents is used as the curing agent. When bonding two metal foils with an adhesive containing an olefin-based resin as an adhesive component, an epoxy-based curing agent may be used as the curing agent from the viewpoint of preventing gas generation caused by the curing reaction.

The conductive auxiliary agent 50 is a member serving as an electrically conduction path between the first current collector foil 21A and the second current collector foil 21B in the conductive adhesive layer 22, and is dispersed in the adhesive 40. Spherical particles are used as the conductive auxiliary agent 50. Here, the spherical particles may include not only true spherical particles but also ellipsoidal particles. The conductive auxiliary agent 50 has a spherical core 51 and a conductive film 52 covering the core 51. The core 51 is a main part of the conductive auxiliary agent 50 and is a member exhibiting a spherical shape. Examples of the material forming the core 51 include ceramic materials such as silica, or resin materials such as epoxy resin, acrylic resin, urethane resin, nylon resin, and silicone resin. The conductive film 52 is a portion exhibiting electrical conductivity in the conductive auxiliary agent 50 and covers the entire core 51. The conductive film 52 is, for example, a metal thin film or alloy thin film coating the core 51. The metal thin film and alloy thin film contain metals such as gold, silver, copper, platinum, nickel, palladium, and aluminum.

In at least a part of the plurality of conductive auxiliary agents 50, the particle size DA is greater than the thickness TH of the conductive adhesive layer 22. Therefore, a part of the conductive auxiliary agent 50 can be exposed from the adhesive 40 and can contact both the first current collector foil 21A and the second current collector foil 21B. The first current collector foil 21A and the second current collector foil 21B are electrically connected to each other via the conductive auxiliary agent 50. When the average particle size of the conductive auxiliary agent 50 is D50 and the value of the standard deviation of the particle size DA of the conductive auxiliary agent 50 is δ, a value obtained by adding twice the standard deviation of the particle size DA of the conductive auxiliary agent 50 to the average particle size of the conductive auxiliary agent 50 (D50 + 2δ, first value) is greater than the thickness TH of the conductive adhesive layer 22. Thus, a large number of conductive auxiliary agents 50 contacting both the first current collector foil 21A and the second current collector foil 21B can be present in the conductive adhesive layer 22. Therefore, even with a small additive amount, the internal resistance of the current collector 21 can be sufficiently reduced. In the present embodiment, the average particle size of the conductive auxiliary agent 50 is greater than the thickness of the adhesive 40. Also, in the present embodiment, a value obtained by adding the standard deviation of the particle size DA of the conductive auxiliary agent 50 to the average particle size of the conductive auxiliary agent 50 (D50 + δ) is greater than the thickness TH of the conductive adhesive layer 22.

The particle size distribution of the conductive auxiliary agent 50 is measured by known methods such as the Coulter method, image analysis method, and laser diffraction/scattering method. The particle size DA of the conductive auxiliary agent 50 corresponds to the maximum distance between any two points on the contour of the conductive auxiliary agent 50 obtained by observation means such as a scanning electron microscope (SEM) or transmission electron microscope (TEM). The average particle size (D50) of the conductive auxiliary agent 50 is the particle size at which the number (or mass) of particles larger than a certain particle size accounts for 50% of the total number (or mass) of measured particles in the particle size distribution. D10 is the particle size at which the number (or mass) of particles larger than a certain particle size accounts for 10% of the total number (or mass) of measured particles in the particle size distribution. D90 is the particle size at which the number (or mass) of particles larger than a certain particle size accounts for 90% of the total number (or mass) of measured particles in the particle size distribution. The average particle size of the conductive auxiliary agent 50 corresponds to the particle size at which the cumulative value in the volume-based cumulative particle size distribution obtained by the laser diffraction/scattering method for powder reaches 50%. The particle size at which the cumulative value reaches 10% corresponds to D10, and the particle size at which the cumulative value reaches 90% corresponds to D90. Here, the value representing the variation in particle size distribution calculated by the formulas "(D50 - D10)/D50" and "(D90 - D50)/D50" for the conductive auxiliary agent 50 may be 0.5 or less, 0.3 or less, or 0.1 or less, respectively. The standard deviation of the particle size DA of the conductive auxiliary agent 50 corresponds to, for example, the standard deviation obtained from the particle sizes of 10,000 to 30,000 particles.

In the present embodiment, a value obtained by adding a value three times the standard deviation of the particle size DA of the conductive auxiliary agent 50 to the average particle size (D50 + 3δ, second value) is less than or equal to a value twice the thickness TH of the conductive adhesive layer 22. Thus, conductive auxiliary agents 50 having extremely large particle sizes are not included or are almost not included in the conductive adhesive layer 22. Therefore, air entrapment is less likely to occur during manufacturing of the current collector 21 (that is, a region where air remains between the first current collector foil 21A and the second current collector foil 21B is less likely to be formed during manufacturing of the current collector 21). Therefore, an increase in internal resistance of the current collector 21 due to the above-mentioned air can be suppressed (details will be described later).

A CV value (coefficient of variation) of the particle size DA of the conductive auxiliary agent 50 in the conductive adhesive layer 22 may be 10% or less. The coefficient of variation is expressed by the formula: "CV value (%) = (δ / D50) × 100". The CV value of the particle size DA of the conductive auxiliary agent 50 may be 7% or less, 5% or less, or 3% or less. A low CV value of the particle size means high monodispersity of the particles. Here, the lower the CV value of the particle size DA of the conductive auxiliary agent 50, the narrower the particle size distribution of the conductive auxiliary agent 50. When the CV value of the particle size DA of the conductive auxiliary agent 50 is 10% or less, it can be said that conductive auxiliary agents 50 having extremely large particle sizes are not included or are almost not included in the conductive adhesive layer 22. Therefore, air entrapment is less likely to occur during manufacturing of the current collector 21 (that is, a region where air remains between the first current collector foil 21A and the second current collector foil 21B is less likely to be formed during manufacturing of the current collector 21). Therefore, an increase in internal resistance of the current collector 21 due to such air can be suppressed (details will be described later).

An addition ratio of the conductive auxiliary agent 50 in the conductive adhesive layer 22 is 0.1% by volume or more and 1.0% by volume or less. In this case, it is possible to lower the internal resistance of the current collector 21 while ensuring the bonding strength between the first current collector foil 21A and the second current collector foil 21B via the conductive adhesive layer 22. The addition ratio may be 0.1% by volume or more and 0.8% by volume or less, 0.2% by volume or more and 0.8% by volume or less, 0.4% by volume or more and 0.6% by volume or less, or 0.1% by volume or more and 0.5% by volume or less.

Returning to FIGS. 1 and 2, the positive electrode active material layer 23 is a member (first active material layer) provided in a rectangular shape at the center in a plan view on the first surface 21Aa of the rectangular first current collector foil 21A. The negative electrode active material layer 24 is a member (second active material layer) provided in a rectangular shape at the center in a plan view on the first surface 21Ba of the rectangular second current collector foil 21B. In the edge portion 21c of the current collector 21, a region where the positive electrode active material layer 23 is not provided is formed on the first surface 21Aa side, and a region where the negative electrode active material layer 24 is not provided is formed on the first surface 21Ba side. The negative electrode active material layer 24 is formed one size larger than the positive electrode active material layer 23. When viewed from the lamination direction D, the entire formation region of the positive electrode active material layer 23 is located within the formation region of the negative electrode active material layer 24.

The positive electrode active material layer 23 includes a positive electrode active material capable of absorbing and releasing charge carriers such as lithium ions. Examples of the positive electrode active material include composite oxides, metallic lithium, and sulfur. The composition of the composite oxide includes, for example, at least one of iron, manganese, titanium, nickel, cobalt, and aluminum, and lithium. Examples of the composite oxide include olivine-type lithium iron phosphate (LiFePO₄), lithium cobalt oxide (LiCoO₂), and lithium nickel cobalt manganese oxide (LiNiMnCoO₂).

The negative electrode active material layer 24 includes a negative electrode active material capable of absorbing and releasing charge carriers such as lithium ions. Examples of the negative electrode active material include carbon such as graphite, artificial graphite, highly oriented graphite, mesocarbon microbeads, hard carbon, and soft carbon, metal compounds, elements capable of being alloyed with lithium or compounds thereof, and boron-added carbon. Examples of the element capable of being alloyed with lithium include silicon (Si) and tin.

The positive electrode active material layer 23 and the negative electrode active material layer 24 can include a binder and a conductive auxiliary agent in addition to the active material. The binder plays a role of connecting the active material or the conductive auxiliary agent to each other and maintaining the conductive network in the electrode. Examples of the binder include fluorine-containing resins such as polyvinylidene fluoride, polytetrafluoroethylene, and fluororubber, thermoplastic resins such as polypropylene and polyethylene, imide resins such as polyimide and polyamideimide, alkoxysilyl group-containing resins, acrylic resins such as polyacrylic acid and polymethacrylic acid, styrene-butadiene rubber, carboxymethyl cellulose, alginates such as sodium alginate and ammonium alginate, water-soluble cellulose ester crosslinked products, and starch-acrylic acid graft polymers. These binders can be used alone or in combination. The conductive auxiliary agent is, for example, a conductive material such as acetylene black, carbon black, and graphite, and can enhance electrical conductivity. As a viscosity adjusting solvent, for example, N-methyl-2-pyrrolidone is used.

For forming the positive electrode active material layer 23 and the negative electrode active material layer 24 on the current collector 21, known methods such as a roll coating method, die coating method, dip coating method, doctor blade method, spray coating method, and curtain coating method are used. Specifically, an active material, a solvent, and, if necessary, a binder and a conductive auxiliary agent are mixed to produce a slurry-like composition for forming active material layer, and the composition for forming active material layer is applied to the current collector 21 and then dried. As the solvent, for example, N-methyl-2-pyrrolidone, methanol, methyl isobutyl ketone, or water can be used. In order to enhance the electrode density, the composition for forming active material layer after drying may be compressed.

The separator 13 is disposed between the positive electrode 11 and the negative electrode 12 in the lamination direction D. The separator 13 is a member that separates the positive electrode 11 and the negative electrode 12 adjacent to each other in the electrode laminate 2, thereby preventing electrical short circuit due to contact between both electrodes while allowing charge carriers such as lithium ions to pass. The separator 13 is disposed between the positive electrode active material layer 23 and the negative electrode active material layer 24 facing each other in the lamination direction D.

The separator 13 has a rectangular shape, which formed one size larger than the positive electrode active material layer 23 and the negative electrode active material layer 24 and formed one size smaller than the current collector 21 when viewed from the lamination direction D. An end portion 13a of the separator 13 is located outside the positive electrode active material layer 23 and the negative electrode active material layer 24 when viewed from the lamination direction D. The end portion 13a of the separator 13 is welded to a seal member 32 described later.

The separator 13 is formed in a sheet shape, for example. The separator 13 is made of, for example, a porous sheet or a nonwoven fabric including a polymer that absorbs and retains an electrolyte. Examples of the material constituting the separator 13 include polypropylene, polyethylene, polyolefin, and polyester. The separator 13 may have a single layer structure or a multilayer structure. In the case of a multilayer structure, the separator 13 may include, for example, a base material layer and a pair of adhesive layers, and may be adhesively fixed to the positive electrode active material layer 23 and the negative electrode active material layer 24 by the pair of adhesive layers. The separator 13 may include a ceramic layer serving as a heat resistant layer. The separator 13 may be reinforced with a vinylidene fluoride resin compound such as polyvinylidene fluoride.

Examples of the electrolyte with which the separator 13 is impregnated include a liquid electrolyte (electrolytic solution) containing a nonaqueous solvent and an electrolyte salt dissolved in the nonaqueous solvent, and a polymer gel electrolyte containing an electrolyte held in a polymer matrix. When the separator 13 is impregnated with an electrolyte, known lithium salts such as LiFSI, LiClO₄, LiAsF₆, LiPF₆, LiBF₄, LiCF₃SO₃, LiN(FSO₂)₂, and LiN(CF₃SO₂)₂ can be used as the electrolyte salt. As the nonaqueous solvent, known solvents such as cyclic carbonates, cyclic esters, chain carbonates, chain esters, and ethers can be used. Two or more of these known solvent materials may be used in combination.

The sealing body 3 is a member that seals the side surface 2a extending in the lamination direction D of the electrode laminate 2. The sealing body 3 maintains an interval between a pair of current collectors 21, 21 adjacent to each other in the lamination direction D so that they do not contact each other, and seals a space S between the pair of current collectors 21, 21. That is, the space S is defined by the current collectors 21, 21 adjacent to each other in the lamination direction D and the sealing body 3. The space S accommodates the positive electrode active material layer 23, the negative electrode active material layer 24, the separator 13, and the electrolyte.

The sealing body 3 is composed of a plurality of frame-like spacers 31 and a plurality of frame-like seal members 32. Each of the spacers 31 and the seal members 32 is made of a resin material. The seal member 32 is welded to the edge portion 21c on both surfaces of the current collector 21 included in the bipolar electrode 14, both surfaces of the first current collector foil 21A included in the positive electrode terminal electrode, and both surfaces of the second current collector foil 21B included in the negative electrode terminal electrode. In the present embodiment, as illustrated in FIG. 2, the seal member 32 is provided so as to cover the edge portion 21c of the current collector 21, that is, the seal member 32 is in contact with both the first surface 21a and the second surface 21b in the edge portion 21c of the current collector 21, and is also located on a side end surface 21d of the current collector 21 so as to connect them. The spacer 31 is disposed between the current collectors 21, 21 adjacent to each other in the lamination direction D and between the seal members 32, 32 adjacent to each other in the lamination direction D.

The seal member 32 includes an overlapping portion overlapping the current collector 21 in the lamination direction D and a protruding portion protruding farther outward than the edge portion 21c of the current collector 21 and not overlapping the current collector 21 in the lamination direction D. The seal member 32 is welded to the first surface 21a at the entire overlapping portion with the first surface 21a and is welded to the second surface 21b at the entire overlapping portion with the second surface 21b. The seal member 32 covers the side end surface 21d of the current collector 21 at the protruding portion. For example, the seal member 32 covers the side end surface 21d of the current collector 21 by welding a first seal disposed on one surface side of the current collector 21 and a second seal disposed on the other surface side of the current collector 21 to each other at the protruding portion.

The spacer 31 is a member that maintains a predetermined interval between the current collectors 21, 21 adjacent to each other in the lamination direction D. The spacer 31 is disposed between the seal members 32, 32 covering each edge portion 21c of the current collectors 21, 21 adjacent to each other in the lamination direction D. A thickness T2 of the spacer 31 is greater than a thickness T1 of a portion of the seal member 32 welded to one surface of the current collector 21.

In the present embodiment, the seal member 32 is provided so as to cover the edge portion 21c of the current collector 21, and a thickness of a portion of the seal member 32 located on the first surface 21a of the current collector 21 is equal to the thickness of a portion of the seal member 32 located on the second surface 21b of the current collector 21. In the present embodiment, as illustrated in FIG. 2, the thickness T1 of the seal member 32 is defined by the thickness of a portion of the seal member 32 located on the second surface 21b of the current collector 21. The thickness T2 of the spacer 31 is defined by the thickness of a portion located between the seal members 32, 32 adjacent to each other in the lamination direction D. The ratio of the thickness T2 of the spacer 31 to the thickness T1 of the seal member 32 is, for example, 1:2 to 1:4.

Both an outer edge portion 32a of the seal member 32 and an outer edge portion 31a of the spacer 31 are protruded farther outward than the edge portion 21c of the current collector 21 when viewed from the lamination direction D. In each spacer 31, the outer edge portion 31a protruding farther outward than the edge portion 21c of the current collector 21 and the outer edge portion 32a of the seal member 32 adjacent each other to the spacer 31 in the lamination direction D protruding farther outward than the edge portion 21c of the current collector 21 are welded to each other at the respective end surfaces side to form a welded portion W. The welded portion W forms the outer surface 3a of the sealing body 3. For welding between the outer edge portion 31a of the spacer 31 and the outer edge portion 32a of the seal member 32, for example, infrared welding or hot plate welding can be used. In the welded portion W, the sealing properties of the space S between the current collectors 21, 21 adjacent to each other in the lamination direction D are ensured by the compatibility between the resin material constituting the seal member 32 and the resin material constituting the spacer 31.

Inside the welded portion W, the spacer 31 is not welded to either the seal member 32 in contact with one of the current collectors 21 or the seal member 32 in contact with the other of the current collectors 21 adjacent to each other in the lamination direction D. In a non-welded portion, the spacer 31 and the seal member 32 in contact with one of the current collectors 21 may be in contact with each other or may be slightly separated from each other. Similarly, in the non-welded portion, the spacer 31 and the seal member 32 in contact with the other of the current collectors 21 may be in contact with each other or may be slightly separated from each other. The spacer 31 is not welded to any of the current collectors 21, 21 adjacent to each other in the lamination direction D.

Above the first surface 21a of the current collector 21, the end portion 13a of the separator 13 described above is welded to an inner edge portion 32b of the seal member 32. In the present embodiment, the inner edge portion 32b of the seal member 32 is aligned with the inner edge portion 31b of the spacer 31, but is not limited thereto. The inner edge of the seal member 32 may be out of alignment with the inner edge portion of the spacer 31. The inner edge portion 32b of the seal member 32 may protrude further inward of the current collector 21 than the inner edge portion 31b of the spacer 31, or the inner edge portion 31b may protrude further inward of the current collector 21 than the inner edge portion 32b.

Examples of the resin material constituting the seal member 32 and the spacer 31 include materials having electrolyte resistance such as acid-modified polyethylene (acid-modified PE), acid-modified polypropylene (acid-modified PP), polyethylene, and polypropylene. The resin material constituting the seal member 32 and the resin material constituting the spacer 31 may be the same or different.

In the present embodiment, the resin material constituting the seal member 32 is acid-modified polyethylene or acid-modified polypropylene, and the resin material constituting the spacer 31 is polyethylene or polypropylene. Acid-modified polyethylene and acid-modified polypropylene have a property of easily adhering to metal as compared with polyethylene and polypropylene that are not acid-modified. In the present embodiment in which the current collector 21 is made of a metal foil such as copper foil or aluminum foil, the adhesive strength (bonding strength) of the seal member 32 to the current collector 21 can be improved by configuring the seal member 32 with acid-modified polyethylene or acid-modified polypropylene. In the spacer 31, which does not require adhesion to the current collector 21, cost reduction of the power storage device 1 can be achieved by using inexpensive polyethylene or polypropylene.

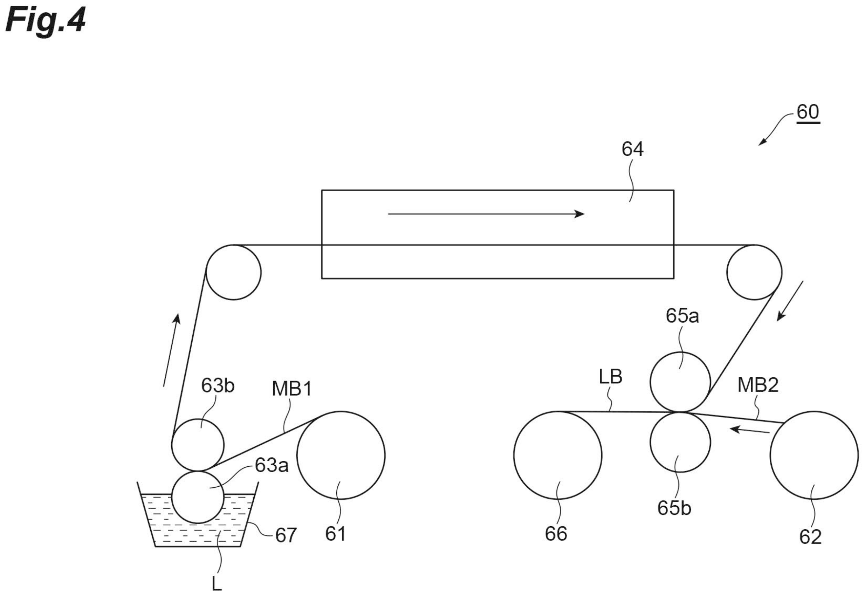

Next, an example of a method for manufacturing the current collector 21 according to the present embodiment will be described with reference to FIG. 4. FIG. 4 is a schematic diagram illustrating a coating apparatus used for manufacturing a current collector.

A coating apparatus 60 illustrated in FIG. 4 is an apparatus for manufacturing the current collector 21, and includes feed rolls 61, 62, a pair of gravure rolls 63a, 63b, a drying furnace 64, a pair of receiving rolls 65a, 65b, a winding roll 66, and a container 67 for containing a liquid L. The liquid L is a solvent in which materials such as the adhesive and the conductive auxiliary agent for the conductive adhesive layer 22 are dispersed.

A metal foil MB1, which will later become the first current collector foil 21A, is wound around the feed roll 61. A metal foil MB2, which will later become the second current collector foil 21B, is wound around the feed roll 62. The metal foil MB1 is fed from the feed roll 61 toward the pair of gravure rolls 63a, 63b. The metal foil MB2 is fed from the feed roll 62 toward the pair of receiving rolls 65a, 65b.

The gravure rolls 63a, 63b are located downstream of the feed roll 61 and apply the liquid L to the metal foil MB1. A part of the gravure roll 63a is in contact with the liquid L contained in the container 67. Thus, as the gravure roll 63a rotates, the liquid L adheres to the gravure roll 63a, and the liquid L is transferred to the metal foil MB1.

The drying furnace 64 is located downstream of the gravure rolls 63a, 63b and is a component that removes the solvent of the liquid L adhering to the metal foil MB1. The metal foil MB1 that has passed through the drying furnace 64 is provided with the conductive adhesive layer 22 (see FIG. 2, etc.).

The receiving rolls 65a, 65b are located downstream of the drying furnace 64 and the feed roll 62 and receive the metal foil MB1 provided with the conductive adhesive layer 22 and the metal foil MB2 fed from the feed roll 62. Between the receiving rolls 65a, 65b, the metal foils MB1, MB2 are pressed together via the conductive adhesive layer 22. Thus, the metal foils MB1, MB2 are bonded together via the conductive adhesive layer 22. Therefore, a bonded foil LB, which will later become the current collector 21, is fed out from the receiving rolls 65a, 65b.

The winding roll 66 is located downstream of the receiving rolls 65a, 65b and winds the bonded foil LB. The wound bonded foil LB is transferred to a manufacturing apparatus for manufacturing the bipolar electrode 14. In the manufacturing apparatus, after forming the positive electrode active material layer 23 and the negative electrode active material layer 24 on the bonded foil LB, the bonded foil LB is cut into a predetermined shape. Thus, the bipolar electrode 14 having the positive electrode 11 and the negative electrode 12 is manufactured. Here, in the manufacturing of the positive electrode active material layer 23, after applying a slurry that will later become the positive electrode active material layer 23 to the bonded foil LB, a drying process in which the slurry is dried is performed. Similarly, in the manufacturing of the negative electrode active material layer 24, a drying process similar to the above drying process is performed. In these drying processes, for example, the slurry and the bonded foil LB are accommodated in a drying furnace set to about 150°C. Thus, the bonded foil LB is also heated to about 150°C. In the case where a large amount of air is entrapped during manufacturing of the bonded foil LB, the air expands in the conductive adhesive layer 22 due to the above heating. As a result, the distance between the metal foils MB1 and MB2 may increase, or a gap may occur between the conductive auxiliary agent contacted and the metal foil MB1 or MB2. If such a space due to expanded air is formed in the conductive adhesive layer 22, electrically connection between the metal foils MB1 and MB2 via the conductive adhesive layer 22 is hindered, and as a result, the internal resistance of the bonded foil LB increases. Therefore, in the conductive adhesive layer 22, it can be said that the relationship between the thickness of the adhesive 40 and the average particle size (D50) of the conductive auxiliary agent 50, the first value, the second value, the CV value of the particle size DA of the conductive auxiliary agent 50, and the like is important from the viewpoint of suppressing air entrapment. The larger the bipolar electrode 14, the more likely air entrapment is to occur. As the bipolar electrode 14 becomes larger, the distance from the center to the end of the metal foils MB1, MB2 in the direction perpendicular to the transport direction of the metal foils MB1, MB2 becomes longer. If air is entrapped between the metal foils MB1, MB2 near the center when the metal foils MB1, MB2 are overlapped, it becomes more difficult to completely push out and remove the air during pressing and bonding of the metal foils MB1, MB2 as the above distance becomes longer. From this viewpoint as well, it can be said that the above relationship is important.

In the power storage device 1 according to the present embodiment described above, the bipolar electrode 14 has the current collector 21 which is a bonded foil in which the first current collector foil 21A and the second current collector foil 21B are bonded together via the conductive adhesive layer 22. Further, the conductive auxiliary agent 50 dispersed in the adhesive 40 in the conductive adhesive layer 22 is a spherical particle having the spherical core 51 and the conductive film 52 covering the core 51, the addition ratio of the conductive auxiliary agent 50 in the conductive adhesive layer 22 is 0.1% by volume or more and 1.0% by volume or less, and a first value obtained by adding twice the standard deviation of the particle size DA of the conductive auxiliary agent 50 to the average particle size of the conductive auxiliary agent 50 is greater than or equal to the thickness TH of the conductive adhesive layer 22. Thus, electrically connection between the first current collector foil 21A and the second current collector foil 21B via the conductive auxiliary agent 50 is favorably achieved, so the internal resistance of the conductive adhesive layer 22 can be sufficiently reduced. In addition, the bonding strength between the first current collector foil 21A and the second current collector foil 21B by the conductive adhesive layer 22 can be ensured. Therefore, according to the power storage device 1, it is possible to provide a bipolar electrode 14 exhibiting favorable bonding strength and conductivity.

Here, the effects and operations of making the above first value greater than the thickness TH of the conductive adhesive layer 22 will be described in detail with reference to (a) and (b) of FIG. 5. (a) of FIG. 5 is a diagram illustrating a particle size distribution of a first conductive auxiliary agent dispersed in a conductive adhesive layer. In (a) of FIG. 5, the horizontal axis represents the particle size, and the vertical axis represents the probability (frequency) of existence. (a) of FIG. 5 illustrates the particle size distributions of the first conductive auxiliary agent included in the first to fifth samples described below. As can be seen from the shape of the graph 101 illustrated in (a) of FIG. 5, the first conductive auxiliary agent is mainly composed of particles having a particle size of 3.0 µm and in the vicinity thereof, and includes few particles having a particle size less than 2.5 µm or greater than 3.4 µm. The average particle size (D50) of the first conductive auxiliary agent shown in graph 101 is 3 µm, D10 of the first conductive auxiliary agent is 2.8 µm, and D90 of the first conductive auxiliary agent is 3.2 µm. The standard deviation of the first conductive auxiliary agent is 0.13 µm.

(b) of FIG. 5 is a diagram showing a relationship between the thickness of the conductive adhesive layer and the resistance value of a sample. (b) of FIG. 5 shows measurement results of 2.5 cm square samples cut from a current collector having a first current collector foil, a second current collector foil, and a conductive adhesive layer described below. In (b) of FIG. 5, the horizontal axis represents the thickness (film thickness) of the conductive adhesive layer, and the vertical axis represents the resistance values of the first to fifth samples.

The first sample is a current collector in which a 50 µm thick aluminum foil as the first current collector foil and an 8 µm thick copper foil as the second current collector foil are integrated by a conductive adhesive layer described below. The conductive adhesive layer is a layered member including an adhesive containing an olefin-based resin as a main component and an epoxy-based curing agent, and a first conductive auxiliary agent dispersed in the adhesive, and has a thickness of about 2.2 µm. In the first sample, the additive amount of the first conductive auxiliary agent is set to 0.2% by volume. The second sample is the same as the first sample except that the thickness of the conductive adhesive layer is about 2.6 µm. The third sample is the same as the first sample except that the thickness of the conductive adhesive layer is about 2.9 µm. The fourth sample is the same as the first sample except that the thickness of the conductive adhesive layer is about 3.2 µm. The fifth sample is the same as the first sample except that the thickness of the conductive adhesive layer is about 3.55 µm.

In (b) of FIG. 5, a line 102 indicates a threshold value of resistance value. Plots 103 to 107 respectively indicate the resistance values of the first to fifth samples. Here, a sample showing a resistance value lower than the line 102 is an electrode current collector satisfying a non-defective condition regarding internal resistance. As illustrated in (b) of FIG. 5, only plot 107 showed a resistance value higher than the line 102. This is presumably because the thickness of the conductive adhesive layer (about 3.55 µm) is clearly greater than the first value (3.26 µm) obtained by adding twice the standard deviation (0.13 µm) of the particle size of the first conductive auxiliary agent to the average particle size (3 µm) of the first conductive auxiliary agent, so electrically connection between the first current collector foil and the second current collector foil via the first conductive auxiliary agent was insufficient. Therefore, as shown in plots 103 to 106, it is presumed that electrically connection between the first current collector foil and the second current collector foil via the first conductive auxiliary agent is favorably achieved by making the above first value greater than the thickness of the conductive adhesive layer.

Next, the effects and operations of setting the addition ratio of the conductive auxiliary agent 50 in the conductive adhesive layer 22 to 0.1% by volume or more and 1.0% by volume or less will be described in detail with reference to (a), (b) of FIG. 6 and (a), (b) of FIG. 7. (a) of FIG. 6 and (a) of FIG.7 are diagrams each showing relationships between the additive amount of the conductive auxiliary agent in the conductive adhesive layer and the internal resistance of the conductive adhesive layer. (b) of FIG.6 and (b) of FIG.7 are diagrams showing relationships between the additive amount of the conductive auxiliary agent in the conductive adhesive layer and the bonding strength of the conductive adhesive layer. In (a), (b) of FIG. 6, the sixth to tenth samples described below were used. In (a), (b) of FIG. 7, the eleventh and twelfth samples described below were used.

The sixth to tenth samples are samples in which the additive amount of the first conductive auxiliary agent in the conductive adhesive layer is different from each other. The sixth sample has the same configuration and shape as the first sample except that the thickness of the conductive adhesive layer is 2.9 µm and the additive amount of the first conductive auxiliary agent is 0.1% by volume. The seventh sample has the same configuration and shape as the sixth sample except that the additive amount of the first conductive auxiliary agent is 0.2% by volume. The eighth sample has the same configuration and shape as the sixth sample except that the additive amount of the first conductive auxiliary agent is 0.4% by volume. The ninth sample has the same configuration and shape as the sixth sample except that the additive amount of the first conductive auxiliary agent is 0.8% by volume. The tenth sample has the same configuration and shape as the sixth sample except that the additive amount of the first conductive auxiliary agent is 5.0% by volume.

In (a) of FIG. 6, a line 110 indicates a threshold value of resistance value. Here, a sample showing a resistance value lower than the line 110 is an electrode current collector satisfying a non-defective condition regarding internal resistance. In (a) of FIG. 6, plots 111 to 115 respectively indicate the resistance values of the sixth to tenth samples. As illustrated in (a) of FIG. 6, even when the addition ratio of the first conductive auxiliary agent in the conductive adhesive layer is set to 0.1% by volume, plot 111 (i.e., the sixth sample) is lower than the line 110. In addition, the resistance value is likely to decrease as the addition ratio of the first conductive auxiliary agent increases. Therefore, all of the resistance values of the seventh to tenth samples, which have a larger additive amount of the first conductive auxiliary agent than the sixth sample, are naturally lower than the line 110 (see plots 112 to 115). However, when the additive amount of the first conductive auxiliary agent is greater than 0.4% by volume, the variation in internal resistance of the conductive adhesive layer is significantly smaller than when the additive amount of the first conductive auxiliary agent is 0.4% by volume or less. On the other hand, when the addition ratio of the first conductive auxiliary agent in the conductive adhesive layer is less than 0.1% by volume, the resistance value of the conductive adhesive layer is likely to increase rapidly. For example, the resistance value of a sample in which the addition ratio of the first conductive auxiliary agent in the conductive adhesive layer is 0.05% by volume was near the line 110 (not illustrated). Therefore, when the addition ratio of the first conductive auxiliary agent in the conductive adhesive layer is less than 0.1% by volume, the resistance value of the current collector cannot be sufficiently reduced.

In (b) of FIG. 6, a line 120 indicates a threshold value of bonding strength between the conductive adhesive layer and the current collector foil included in the sample. A sample showing a bonding strength higher than the line 120 is a bipolar electrode current collector satisfying a non-defective condition regarding bonding strength. In (b) of FIG. 6, plots 121 to 125 respectively indicate the bonding strength of the sixth to tenth samples. Graph 126 indicates the change in bonding strength due to the change in addition ratio of the first conductive auxiliary agent. Graph 126 is a graph estimated based on plots 121 to 125. As illustrated in (b) of FIG. 6, all of plots 121 to 124 are higher than the line 120, but plot 125 is lower than the line 120. Therefore, when an excessive amount of the first conductive auxiliary agent is included in the conductive adhesive layer, it can be said that a bipolar electrode current collector that does not satisfy the non-defective condition regarding bonding strength is produced.

The eleventh and twelfth samples are samples in which the additive amount of the conductive auxiliary agent in the conductive adhesive layer is different from each other and have the same shape as the sixth sample. The additive amount of the conductive auxiliary agent in the eleventh sample is 0.4% by volume, and the additive amount of the conductive auxiliary agent in the twelfth sample is 5.0% by volume. The conductive auxiliary agent included in the eleventh and twelfth samples (hereinafter referred to as the second conductive auxiliary agent) is different from the first conductive auxiliary agent included in the sixth to tenth samples. FIG. 8 illustrates the particle size distribution of the second conductive auxiliary agent included in the eleventh and twelfth samples. In FIG. 8, the horizontal axis represents the particle size, and the vertical axis represents the probability of existence. The average particle size (D50) of the second conductive auxiliary agent included in the eleventh and twelfth samples and illustrated in FIG. 8 is 2.6 µm, D10 of the second conductive auxiliary agent is 1.1 µm, and D90 of the second conductive auxiliary agent is 5.5 µm. The standard deviation of the second conductive auxiliary agent is 1.2 µm.

In (a) of FIG. 7, a line 130 indicates a threshold value of resistance value. Here, a sample showing a resistance value lower than the line 130 is an electrode current collector satisfying a non-defective condition regarding internal resistance. The threshold value indicated by the line 130 is the same as the threshold value indicated by the line 110 in (a) of FIG. 6. In (a) of FIG. 7, plots 131 and 132 respectively indicate the resistance values of the eleventh and twelfth samples. As illustrated in (a) of FIG. 7, when the addition ratio of the second conductive auxiliary agent in the conductive adhesive layer is 0.4% by volume or more, plot 131 (i.e., the eleventh sample) is lower than the line 130. In addition, comparison of plots 131 and 132 shows that the resistance value tends to decrease as the addition ratio of the second conductive auxiliary agent increases. Therefore, the resistance value of plot 132 is naturally lower than the line 110 (see plot 132).

In (b) of FIG. 7, a 140 indicates a threshold value of bonding strength between the conductive adhesive layer and the current collector foil included in the sample. The threshold value indicated by the line 140 is the same as the threshold value indicated by the line 120 in (b) of FIG. 6. In (b) of FIG. 7, plots 141 and 142 respectively indicate the bonding strength of the eleventh and twelfth samples. As illustrated in (b) of FIG. 7, plot 141 is higher than the line 140, but plot 142 is lower than the line 140. From these data, it can be said that when an excessive amount of the second conductive auxiliary agent is included in the conductive adhesive layer, a bipolar electrode current collector that does not satisfy the non-defective condition regarding bonding strength is produced.

From the data of the sixth to twelfth samples described above, it can be said that, for either the first conductive auxiliary agent or the second conductive auxiliary agent, if the addition ratio of the conductive auxiliary agent in the conductive adhesive layer is 2.0% or less, it is highly likely that a bipolar electrode current collector satisfying the non-defective condition regarding bonding strength can be produced, if the addition ratio is 1.0% or less, a bipolar electrode current collector satisfying the non-defective condition regarding bonding strength can be reliably produced, and if the addition ratio is 0.8% or less, a bipolar electrode current collector satisfying the non-defective condition regarding bonding strength can be produced even more reliably.

In the present embodiment, the average particle size of the conductive auxiliary agent 50 may be greater than the thickness TH of the conductive adhesive layer 22. In this case, electrically connection between the first current collector foil 21A and the second current collector foil 21B via the conductive auxiliary agent 50 is further improved.

In the present embodiment, each of the first current collector foil 21A and the second current collector foil 21B has a rectangular shape, a length of one side of the first current collector foil 21A and a length of one side of the second current collector foil 21B are each 500 mm or more, and a CV value of the particle size DA of the conductive auxiliary agent 50 in the conductive adhesive layer 22 may be 10% or less. In this case, a conductive auxiliary agent 50 having a particle size significantly larger than the thickness TH of the conductive adhesive layer 22 is less likely to be present in the conductive adhesive layer 22. Thus, even when the bipolar electrode 14 is enlarged, air surrounding the conductive auxiliary agent 50 is less likely to be entrapped together in the conductive adhesive layer 22 when bonding the first current collector foil 21A and the second current collector foil 21B, that is, air entrapment is less likely to occur. Therefore, an increase in resistance of the bipolar electrode 14 due to deformation or the like of the first current collector foil 21A and/or the second current collector foil 21B caused by such air is less likely to occur. In addition, even when the bipolar electrode 14 is enlarged, each of the first current collector foil 21A and the second current collector foil 21B can be favorably bonded to the conductive adhesive layer 22. For example, in the sixth sample described above, the CV value of the particle size of the first conductive auxiliary agent is about 4% (0.13/3 × 100), which is less than 10%. In all of the bipolar electrodes using current collectors corresponding to such a sixth sample, no deformation of the current collector foil caused by entrapped air was observed. On the other hand, in the eleventh sample described above, the CV value of the particle size of the second conductive auxiliary agent is about 46% (1.2/2.6 × 100), which is significantly greater than 10%. In fact, in some of the bipolar electrodes using current collectors corresponding to the eleventh sample, deformation of the current collector foil caused by entrapped air was confirmed. Such deformation of the current collector foil is presumed to be likely to occur when a large number of conductive auxiliary agents having a particle size larger than the thickness of the conductive adhesive layer are dispersed in the conductive adhesive layer. Specifically, it is presumed that, when bonding the first current collector foil and the second current collector foil, air surrounding the conductive auxiliary agent having such a large particle size is easily entrapped in the conductive adhesive layer, and even after subsequent pressing processes and the like, it is difficult to remove the air from the conductive adhesive layer, resulting in deformation of the current collector foil. Therefore, from the viewpoint of preventing deformation or the like of the current collector foil, it can be said that control of the variation in particle size of the conductive auxiliary agent is important.

Alternatively, in the present embodiment, each of the first current collector foil 21A and the second current collector foil 21B has a rectangular shape, a length of one side of the first current collector foil 21A and a length of one side of the second current collector foil 21B are each 500 mm or more, and a second value obtained by adding a value three times the standard deviation to the average particle size of the conductive auxiliary agent 50 may be less than or equal to a value twice the thickness TH of the conductive adhesive layer 22. In this case as well, a conductive auxiliary agent 50 having a particle size significantly larger than the thickness TH of the conductive adhesive layer 22 is less likely to be present in the conductive adhesive layer 22. Thus, even when the bipolar electrode 14 is enlarged, air entrapment caused by the conductive auxiliary agent 50 is less likely to occur between the first current collector foil 21A and the second current collector foil 21B. Therefore, an increase in resistance of the bipolar electrode 14 due to deformation or the like of the first current collector foil 21A and/or the second current collector foil 21B caused by such air is less likely to occur. In addition, even when the bipolar electrode 14 is enlarged, each of the first current collector foil 21A and the second current collector foil 21B can be favorably bonded to the conductive adhesive layer 22. For example, in the sixth sample described above, the second value (3.39 µm) obtained by adding three times the standard deviation (0.13 µm) of the particle size of the first conductive auxiliary agent to the average particle size (3 µm) of the first conductive auxiliary agent is less than the value (5.8 µm) obtained by doubling the thickness (2.9 µm) of the conductive adhesive layer. In all of the bipolar electrodes using current collectors corresponding to such a sixth sample, no deformation of the current collector foil caused by entrapped air was observed. On the other hand, in the eleventh sample described above, the second value (6.2 µm) obtained by adding three times the standard deviation (1.2 µm) of the particle size of the second conductive auxiliary agent to the average particle size (2.6 µm) of the second conductive auxiliary agent is greater than the value (5.8 µm) obtained by doubling the thickness (2.9 µm) of the conductive adhesive layer. In fact, in some of the bipolar electrodes using current collectors corresponding to the eleventh sample, deformation of the current collector foil caused by entrapped air was confirmed. Therefore, from the viewpoint of preventing deformation of the current collector foil, it can be said that control of the variation in particle size of the conductive auxiliary agent is important.

In the present embodiment, the thickness of the first current collector foil 21A is twice or more the thickness of the second current collector foil 21B, the thickness of the second current collector foil 21B is less than 10 µm, the thickness TH of the conductive adhesive layer 22 is smaller than the thickness of the second current collector foil 21B, and a CV value of the particle size DA of the conductive auxiliary agent 50 in the conductive adhesive layer 22 may be 10% or less. In this case, a conductive auxiliary agent 50 having a particle size significantly larger than the thickness TH of the conductive adhesive layer 22 is less likely to be present in the conductive adhesive layer 22. Thus, air entrapment caused by the conductive auxiliary agent 50 is less likely to occur between the first current collector foil 21A and the second current collector foil 21B. Therefore, an increase in resistance of the bipolar electrode 14 due to deformation or the like of the current collector foil (especially the second current collector foil 21B) caused by said air is less likely to occur. In fact, as described above, in all of the bipolar electrodes using current collectors corresponding to the sixth sample described above, no deformation of the current collector foil caused by entrapped air was observed.

In the present embodiment, the conductive adhesive layer 22 may further include an epoxy-based curing agent as a curing agent together with an olefin-based adhesive as the adhesive. In this case, high electrolyte resistance can be exhibited as the adhesive, so favorable bonding strength can be exhibited over a long period. In addition, when an epoxy-based curing agent is used as the curing agent together with an olefin-based adhesive as the adhesive, this makes it possible to reduce favorably gas generation in the curing reaction between the adhesive and the curing agent during manufacturing of the current collector 21. Here, an isocyanate-based curing agent is also generally used as a curing agent for olefin-based adhesives, but in the curing reaction between the olefin-based adhesive and the isocyanate-based curing agent, gas is generated. From the viewpoint of preventing deformation or the like of the current collector foil caused by this gas, in the present embodiment, an epoxy-based curing agent as a curing agent together with an olefin-based adhesive as the adhesive may further be included in the conductive adhesive layer 22.

A power storage device according to one aspect of the present disclosure is, for example, as described in the following [1] to [6], and these have been described in detail based on the above embodiment.
[1] A power storage device comprising a plurality of bipolar electrodes overlapping each other in a lamination direction,
   wherein each of the plurality of bipolar electrodes comprises:
      a first current collector foil and a second current collector foil overlapping each other in the lamination direction;
      a conductive adhesive layer positioned between the first current collector foil and the second current collector foil and bonded to the first current collector foil and the second current collector foil;
      a first active material layer positioned on a surface of the first current collector foil; and
      a second active material layer positioned on a surface of the second current collector foil,
   wherein the conductive adhesive layer includes an adhesive and a conductive auxiliary agent dispersed in the adhesive,
   wherein the conductive auxiliary agent is a spherical particle having a spherical core and a conductive film covering the core,
   wherein an addition ratio of the conductive auxiliary agent in the conductive adhesive layer is 0.1% by volume or more and 1.0% by volume or less, and
   wherein a first value obtained by adding twice a standard deviation of a particle size of the conductive auxiliary agent to an average particle size of the conductive auxiliary agent is greater than or equal to a thickness of the conductive adhesive layer.
[2] The power storage device according to [1], wherein an average particle size of the conductive auxiliary agent is greater than a thickness of the conductive adhesive layer.
[3] The power storage device according to [1] or [2],
   wherein each of the first current collector foil and the second current collector foil has a rectangular shape,
   wherein a length of one side of the first current collector foil and a length of one side of the second current collector foil are each 500 mm or more, and
   wherein a CV value of a particle size of the conductive auxiliary agent in the conductive adhesive layer is 10% or less.
[4] The power storage device according to any one of [1] to [3],
   wherein each of the first current collector foil and the second current collector foil has a rectangular shape,
   wherein a length of one side of the first current collector foil and a length of one side of the second current collector foil are each 500 mm or more, and
   wherein a second value obtained by adding a value three times the standard deviation to the average particle size of the conductive auxiliary agent is less than or equal to a value twice a thickness of the conductive adhesive layer.
[5] The power storage device according to any one of [1] to [4],
   wherein a thickness of the first current collector foil is twice or more a thickness of the second current collector foil,
   wherein a thickness of the second current collector foil is less than 10 µm,
   wherein a thickness of the conductive adhesive layer is smaller than the thickness of the second current collector foil, and
   wherein a CV value of a particle size of the conductive auxiliary agent in the conductive adhesive layer is 10% or less.
[6] The power storage device according to any one of [1] to [5],
   wherein the conductive adhesive layer includes an olefin-based adhesive as the adhesive and further includes an epoxy-based curing agent as a curing agent.

However, one aspect of the present disclosure is not limited to the above embodiment and [1] to [6]. One aspect of the present disclosure can be further modified without departing from the scope thereof.

### Reference Signs List

- 1: Power storage device
- 2: Electrode laminate
- 3: Sealing body
- 3a: Outer surface
- 14: Bipolar electrode
- 21: Current collector
- 21A: First current collector foil
- 21B: Second current collector foil
- 21a: First surface
- 21b: Second surface
- 22: Conductive adhesive layer
- 23: Positive electrode active material layer (first active material layer)
- 24: Negative electrode active material layer (second active material layer)
- 31: Spacer
- 31a: Outer edge portion
- 31b: Inner edge portion
- 32: Seal member
- 32a: Outer edge portion
- 32b: Inner edge portion

- 40: Adhesive
- 50: Conductive auxiliary agent
- 51: Core
- 52: Conductive film
- D: Lamination direction
- DA: Particle size
- T1: Thickness of seal member
- T2: Thickness of spacer
- TH: Thickness of conductive adhesive layer

## Claims

1. A power storage device comprising a plurality of bipolar electrodes overlapping each other in a lamination direction,
wherein each of the plurality of bipolar electrodes comprises:
a first current collector foil and a second current collector foil overlapping each other in the lamination direction;
a conductive adhesive layer positioned between the first current collector foil and the second current collector foil and bonded to the first current collector foil and the second current collector foil;
a first active material layer positioned on a surface of the first current collector foil; and
a second active material layer positioned on a surface of the second current collector foil,
wherein the conductive adhesive layer includes an adhesive and a conductive auxiliary agent dispersed in the adhesive,
wherein the conductive auxiliary agent is a spherical particle having a spherical core and a conductive film covering the core,
wherein an addition ratio of the conductive auxiliary agent in the conductive adhesive layer is 0.1% by volume or more and 1.0% by volume or less, and
wherein a first value obtained by adding twice a standard deviation of a particle size of the conductive auxiliary agent to an average particle size of the conductive auxiliary agent is greater than or equal to a thickness of the conductive adhesive layer.

2. The power storage device according to claim 1, wherein an average particle size of the conductive auxiliary agent is greater than a thickness of the conductive adhesive layer.

3. The power storage device according to claim 1 or 2,
wherein each of the first current collector foil and the second current collector foil has a rectangular shape,
wherein a length of one side of the first current collector foil and a length of one side of the second current collector foil are each 500 mm or more, and
wherein a CV value of a particle size of the conductive auxiliary agent in the conductive adhesive layer is 10% or less.

4. The power storage device according to claim 1 or 2,
wherein each of the first current collector foil and the second current collector foil has a rectangular shape,
wherein a length of one side of the first current collector foil and a length of one side of the second current collector foil are each 500 mm or more, and
wherein a second value obtained by adding a value three times the standard deviation to an average particle size of the conductive auxiliary agent is less than or equal to a value twice a thickness of the conductive adhesive layer.

5. The power storage device according to claim 1 or 2,
wherein a thickness of the first current collector foil is twice or more a thickness of the second current collector foil,
wherein a thickness of the second current collector foil is less than 10 µm,
wherein a thickness of the conductive adhesive layer is smaller than a thickness of the second current collector foil, and
wherein a CV value of a particle size of the conductive auxiliary agent in the conductive adhesive layer is 10% or less.

6. The power storage device according to claim 1 or 2, wherein the conductive adhesive layer includes an olefin-based adhesive as the adhesive and further includes an epoxy-based curing agent as a curing agent.
